Europäisches Patentamt

European Patent Office

Office européen des brevets

(11) Publication number: **0 295 329 B1**

# EUROPEAN PATENT SPECIFICATION

(45) Date of publication of patent specification: **05.08.92**  (51) Int. Cl.⁵: **G02F 1/133**, G02B 5/20

(21) Application number: **87113116.5**

(22) Date of filing: **08.09.87**

(54) **Liquid crystal color display device.**

(30) Priority: **17.06.87 JP 149277/87**

(43) Date of publication of application:
**21.12.88 Bulletin 88/51**

(45) Publication of the grant of the patent:
**05.08.92 Bulletin 92/32**

(84) Designated Contracting States:
**DE FR GB IT NL**

(56) References cited:
**EP-A- 0 154 443**
**EP-A- 0 224 040**
**JP-A- 6 088 986**

(73) Proprietor: **Uchida, Tatsuo**
**16-13-42, Maruyama 1-chome**
**Tagajo-shi Miyagi-ken(JP)**

Proprietor: **Stanley Electric Co., Ltd.**
**2-9-13, Nakameguro**
**Meguro-ku Tokyo 153(JP)**

(72) Inventor: **Uchida, Tatsuo**
**16-13-42 Maruyama 1-chome**
**Tagajyo-shi Miyagi-ken(JP)**
Inventor: **Aizawa, Masanobu**
**5-10-16, Kohnan Kohnan-ku**
**Yokohama-shi Kanagawa-ken(JP)**

(74) Representative: **Flach, Dieter Rolf Paul,**
**Dipl.-Phys. et al**
**Patentanwälte Andrae/Flach/Haug/Kneissl**
**Prinzregentenstrasse 24**
**W-8200 Rosenheim(DE)**

## Description

The present invention relates to a liquid crystal color display device ensuring a color display particularly distinct and contrastive.

A prior art disclosed, for example, in Japanese Patent Laid-Open No. 88986/1985 is conventional as representing a liquid crystal color display device for full color display. Such device comprises forming clear electrodes working as a ringing electrode and a scanning electrode each on opposite surfaces of two clear substrates disposed opposite each other, structuring the one ringing side clear electrode in two layers, interposing color filter films red, green and blue between the clear electrodes through dyeing, joining each electrode electrically at a portion other than a display part. A voltage can thus be impressed uniformly on the whole liquid crystal layer, thereby obtaining a distinct color display.

However, in the prior art liquid crystal color display device mentioned above, since the color filter films are formed through dyeing, the color filter films dissolve in etching reagent to separate when forming the second-layer clear electrode through photoetching, which is not to cope with productivity.

Further, when forming the second-layer clear electrode through a lift-off process, the electrode film cannot be thickened, and thus a problem is such that it is very difficult to form a low resistance film practically, namely to lower a resistance value of the clear electrodes entirely.

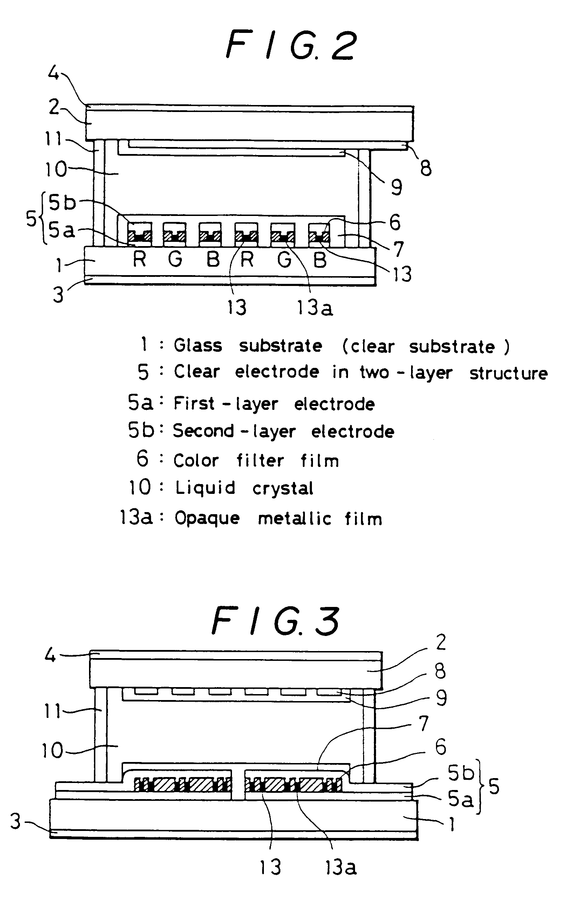

A liquid crystal colour display in accordance to the precharacterizing portion of claim 1 is know from EP-A-224 040. Fig. 2 of this reference discloses a liquid crystal colour display comprising a clear substrate with a pattern of clear electrodes each electrode having a first layer electrode electrically connected to a second layer electrode through a plurality of pin holes in a colour filter interposed in between said first electrode layer and said second electrode layer.

It is an object of the invention to provide a liquid crystal colour display device adaptable to productivity and ensuring a contrastive colour display.

This task is solved by the features incorporated in claim 1. Subclaims 2 and 3 concern preferred embodiments of the invention.

In the liquid crystal colour display in, accordance with the invention a construction is suggested in which an opaque metallic film is arranged in the pin holes to connect electrically said first and second electrode layers.

Thus, a uniform driving voltage can be impressed entirely on a liquid crystal cell, and a contrastive colour display is obtainable. Then, since the opaque metallic film is provided in the pin hole, a deterioration of display contrast due to the light coming through the pin hole will not arise.

Meanwhile, the color filter film can be formed through various means, however, in case it is formed through electrodeposition, it never dissolves in a photoetching reagent for forming the second-layer clear electrode, thus enhancing productivity.

As described above, according to the invention, a plurality of pin holes are provided on a color filter film, a first layer and a second layer of the clear electrode in a multi-layer structure are joined together through an opaque metallic film interposed in the pin hole, therefore the light does not come through the pin hole and a contrastive and distinct color picture is obtainable consequently, and further the color filter film can be formed through, for example, electrodeposition, thus enhancing productivity.

One way of carrying out the invention is described in detail below with reference to drawings which illustrate specific embodiments, in which:

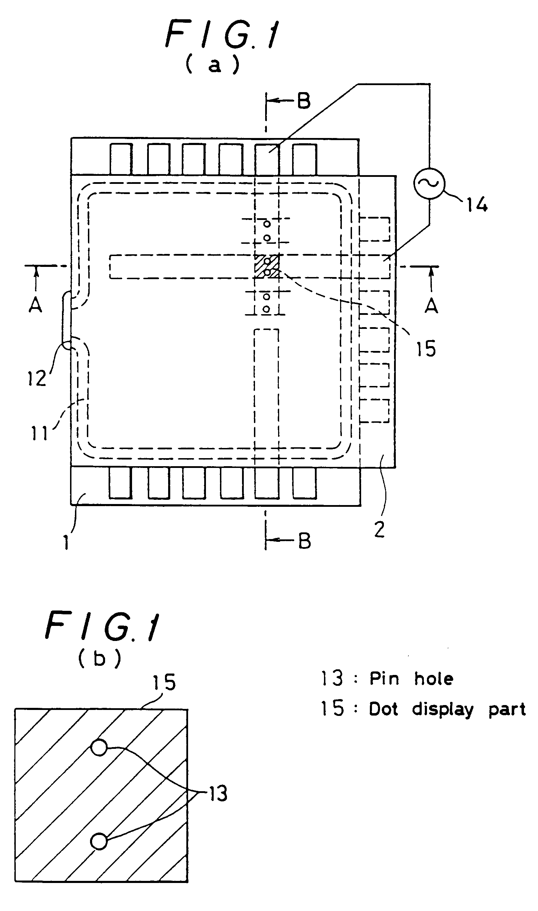

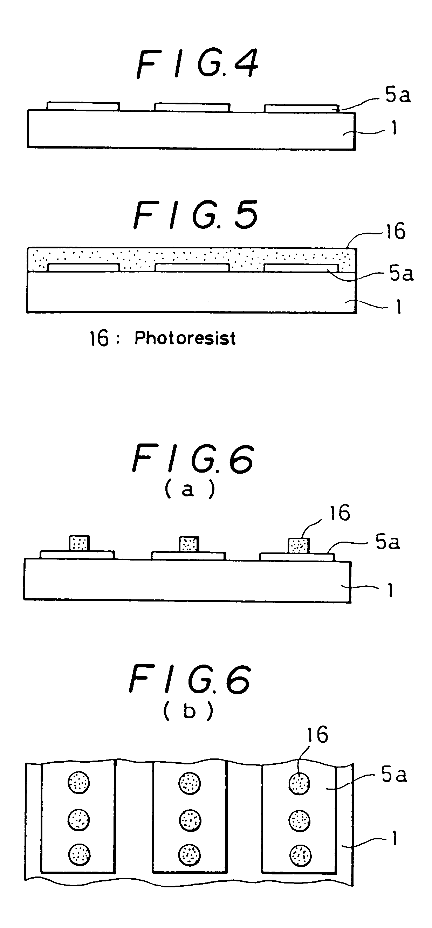

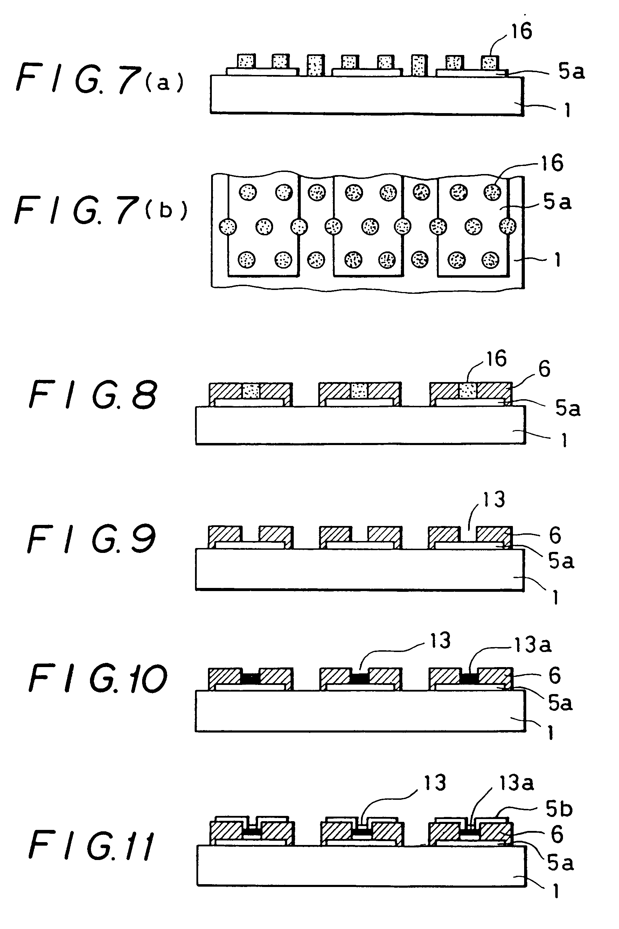

Fig. 1 is a drawing showing a main part of a liquid crystal color display device relating to the invention; Fig. 2 is a sectional structural drawing taken on line A - A of Fig. 1; Fig. 3 is a sectional structural drawing taken on line B - B of Fig. 1; Fig. 4 to Fig. 11 indicate a manufacturing process, wherein Fig. 4 is a sectional view showing the state where a first electrode is formed, Fig. 5 is a sectional view showing the state where a photoresist is applied, Fig. 6 is a drawing representing an example wherein pin hole photoresists are provided in a row per electrode, Fig. 7 is a drawing representing an example wherein the pin hole photoresists are spaced apart equally at intervals smaller than a pitch of a dot display part each, Fig. 8 is a sectional view showing the state where a color filter film is formed, Fig. 9 is a sectional view showing the state where a pin hole is formed on the color filter film, Fig. 10 is a sectional view showing the state where an opaque metallic film is formed in the pin hole, and Fig. 11 is a sectional view showing the state where a second electrode is formed. Preferred examples of this invention will be described with reference to the accompanying drawings.

Fig. 1 is a plan view showing a main part of a liquid crystal color display device relating to the invention, indicating the case where a color dot matrix display is carried out. Then, Fig. 2 and Fig. 3 are sectional views taken on lines A - A and B - B of Fig. 1 respectively. In the drawings, 1 and 2 denote glass substrates or clear substrates forming a liquid crystal cell, polarizing plates 3, 4 are provided on the outside thereof and disposed opposite each other. Then, a clear electrode 5 has a multi-layer structure with a ringing electrode provided on the one glass substrate 1, a color filter film 6 coming in red (R), green (G) and blue (B) is interposed between a first electrode 5a and a second electrode 5b, by which two layers of the electrode 5 are provided, and an orientation film 7 is provided on the clear electrode 5. Further, a clear electrode 8 or scanning electrode is provided on the inside of the other glass substrate 2, and an orientation film 9 is provided thereon. Then, a liquid crystal 10 is enclosed between both the glass substrates 1, 2 by a sealing adhesive 11 and an end sealing adhesive 12.

A plurality of pin holes (through holes) 13 are formed on the color filter film 6, and an opaque metallic film 13a is formed and interposed through, for example, electrodeposition between the first- and second electrodes 5a, 5b in the pin hole 13. Thus, the first- and second electrodes 5a, 5b are connected electrically. Then, when a driving voltage is given to the clear electrode 5 in multi-layer structure and the other clear electrode 8 from an AC supply 14, a dot display part 15 operates for dot display, and thus a predetermined color picture is displayed as a whole. The pin hole 13 is provided in the same number (2 pieces in the illustration) at every dot displays 15, and further a back illumination will be necessary for the color display to obtain in this case.

In the dot matrix liquid crystal color display device constructed as above, the color filter film 6 is provided correspondingly to the dot display part 15, and a plurality of pin holes 13 are formed on the color filter film 6. Then, the first layer and the second layer of the clear electrode 5 in a multi-layer structure on a ringing side are joined together through the opaque metallic film 13a in the pin hole 13.

Consequently, an electric resistance value of the ringing electrode indicates parallel resistance values of the first and second electrodes 5a, 5b, and since the clear first electrode 5a has its resistivity kept low through heat treatment given thoroughly before formation of the color filter film 6, the situation that the second electrode 5b is subjected to heat treatment only within a limit of heat resistance of the color filter film 6 can be compensated reasonably thereby. That is, resistivity of the second electrode 5b being not lowered satisfactorily can be compensated as the aforementioned parallel resistance values. Accordingly, a satisfactorily low electric resistance value is obtainable as far as a tip of the ringing electrode, and a uniform driving voltage can be impressed on the liquid crystal cell entirely, thus obtaining a contrastive and distinct color display.

Further, the color filter film 6 comes under the second electrode 5b, therefore an electrostatic capacity of the color filter film 6 is not influential, and a distortion of the driving voltage is kept from arising. Accordingly, a color dispersion can be removed, and a picture distinct in color display is thus obtainable.

Here, if the pin hole 13 is formed to have a size 50 $\mu$m or below, then the size may be too small to notice, and a display effect will not be prevented thereby. Further, the opaque metallic film 13a provided in the pin hole functions as a prevention against the back illumination light coming through the pin hole 13, therefore a distinct color picture is obtainable. Then, from selecting silver (Ag) as a material of the metallic film 13a, a porous surface condition is obtainable through electroplating (electrodeposition) or other process, and hence it looks black, and a reflection of the extraneous light from the front can be prevented, thus obtaining a distinct color picture.

Next, one example of a manufacturing process of the liquid crystal color display device constructed as above will be described. Then, the description refers concentrically to a process of the clear electrode in two-layer structure with reference to Fig. 4 to Fig. 11 in that order.

(1) First, a clear conductive film (ITO or the like) is formed on the glass substrate 1 forming a liquid crystal cell through sputtering or other process, and then the first electrode 5a, i.e. the first-layer-electrode 5a is formed through photoetching (Fig. 4).

(2) A photoresist 16 is applied on the first electrode 5a by means of a roll coater or the like (Fig. 5).

(3) The aforementioned photoresist 16 is formed like a dot (pin hole size) through photolithography.

In this case, a photolithography according to mask alignment will be necessary for forming pin holes 13 in one row per electrode, as shown in Fig. 6, however, a rate of the light coming through each dot display part 15 and a junction resistance value of the first and second electrodes 5a, 5b become uniform. Fig. 6 (a) is a sectional view, and Fig. 6 (b) is a plan view.

Further, as shown in Fig. 7, the adjacent pin holes may be spaced apart equally all and the distance may be taken smaller than a pitch of the dot display part 15, a mask alignment may be omitted for forming the pin holes 13 in this case, and a dispersion of the rate of the light coming through and the electrode junction resistance value mentioned above can be minimized. Fig. 7 (a) is a sectional, view, and Fig. 7 (b) is a plan view.

(4) Next, the color filter film 6 is applied on the first electrode 5a provided with the photoresist 16 according to a known electrodeposition (Fig. 8).

In this case, since a portion of the dotted photoresist 16 is insulated electrically, the color filter film 6 is not applied.

(5) Before separating the photoresist 16, the glass substrate 1 is heated at sintering temperature whereat the photoresist 16 dissolves in a separating solution but the color filter film 6 does not dissolve, and then a plurality of dotted pin holes 13 are formed on the color filter film 6 (Fig. 9 and Fig. 10).

In this case, to heat the glass substrate 1 at sintering temperature is to harden the color filter film 6 temporarily.

(6) The glass substrate 1 is heated at burning temperature so as to harden the color filter film 6 with the pin holes 13 formed thereon.

(7) The opaque metallic film 13a having a porous surface opaque and hard to reflect the light such as silver (Ag) or the like is formed on the substrate having the aforementioned hardened color filter film 6 applied thereon through electrodeposition such as electroplating or the like.

In this case, the metallic film 13a sticks only to a portion of the clear electrode exposed in the pin hole provided on the color filter film 6.

Then, the opaque and porous metallic film 13a is easily obtainable from dissolving silver iodide (AgI) in an organic solvent (methanol, acetonitrile or the like) and controlling a plating voltage properly. Thus, not only the light from the back can be shut off but also a reflection of the light incident from the front can be suppressed, thereby preventing a deterioration of a purity of the display color further securely.

(8) Next, the second electrode 5b, i.e. the second-layer electrode 5b is formed by means of the same photomask as in the case of the first electrode 5a (Fig. 11). In this case, the clear conductive film is formed first likewise, and then the second layer is formed through photoetching.

In this case, since the same photomask as the first layer is used, a cost of the mask can be saved, and an alignment of high precision is obtainable. Further, the first and second electrodes 5a, 5b are joined electrically together through the opaque metallic film 13a in the pin hole 13, and thus the clear electrode 5 in multilayer structure is obtained.

(9) The glass substrate 1 is reheated at a tight treating temperature for enhancing a sticking efficiency of the second electrode 5b and the color filter film 6.

The glass substrate having a ringing electrode in multi-layer structure is formed as described above, and then the dot matrix liquid crystal color display device is manufactured thereafter through a normal process similar to the dot matrix liquid crystal cell. Since the color filter film 6 is formed according to electrodeposition, the color filter film 6 can be prevented from separating at the process (8) for photoetching, and productivity can be enhanced accordingly.

Then, the embodiment has the liquid crystal display device in dot matrix display system described particularly therefor, however, the invention can be applied, needless to say, to a general liquid crystal color display device.

## Claims

1. A liquid crystal colour display comprising a transparent substrate (1) bearing a pattern of transparent electrodes, each electrode (5) having a first electrode layer (5a) electrically connected to a second electrode layer (5b) through a plurality of pin holes (13) in a colour filter (6) interposed between said first electrode layer (5a) and said second electrode layer (5b), characterized in that an opaque metallic film (13a) is arranged in said pin holes (13) to connect electrically said first and second electrode layers (5a,5b).

2. The liquid crystal colour display device according to Claim 1, wherein said opaque metallic film (13a) is formed by electrodeposition.

3. The liquid crystal colour display device according to Claim 1 or 2, wherein said opaque metallic film consists of silver (Ag).

## Revendications

1. Affichage en couleurs à cristaux liquides comprenant un substrat transparent (1) portant un réseau d'électrodes transparentes, chaque électrode (5) comportant une première couche d'électrode (5a) reliée électriquement à une seconde couche d'électrode (5b) à travers une multiplicité de trous ponctuels (13) dans un filtre de couleur (6) interposé entre ladite première couche d'électrode (5a) et ladite seconde couche d'électrode (5b), caractérisé en ce qu'un film métallique opaque (13a) est disposé dans lesdits trous ponctuels (13) pour relier électriquement lesdites première et seconde couches d'électrode (5a,5b).

2. Dispositif d'affichage en couleurs à cristaux liquides selon la revendication 1, dans lequel ledit film métallique opaque (13a) est formé par électrodéposition.

3. Dispositif d'affichage en couleurs à cristaux liquides selon l'une des revendications 1 et 2, dans lequel ledit film métallique opaque est constitué par de l'argent (Ag).

**Patentansprüche**

1. Flüssigkristall-Farbanzeigevorrichtung mit einem Substrat (1), welches ein Muster von transparenten Elektroden trägt, wobei jede Elektrode (5) eine erste Elektrodenschicht (5a) aufweist, die mit einer zweiten Elektrodenschicht (5b) über mehrere Nadellöcher (13) in einem zwischen der ersten Elektrodenschicht (5a) und der zweiten Elektrodenschicht (5b) eingefügten Farbfilter (6) elektrisch verbunden ist, **dadurch gekennzeichnet,** daß ein opaker Metallfilm (13a) in den Nadellöchern (13) angeordnet ist, um die erste und zweite Elektrodenschicht (5a, 5b) elektrisch zu verbinden.

2. Flüssigkristall-Farbanzeigevorrichtung nach Anspruch 1, bei welcher der opake Metallfilm (13a) durch elektrolytische Abscheidung gebildet ist.

3. Flüssigkristall-Farbanzeigevorrichtung nach Anspruch 1 oder 2, bei welcher der opake Metallfilm (13a) aus Silber (Ag) besteht.

# F I G. 1
## ( a )

# F I G. 1
## ( b )

13 : Pin hole

15 : Dot display part

# F I G. 2

1 : Glass substrate (clear substrate)

5 : Clear electrode in two-layer structure

5a: First-layer electrode

5b: Second-layer electrode

6 : Color filter film

10 : Liquid crystal

13a: Opaque metallic film

# F I G. 3

# FIG.4

5a

1

# FIG.5

16

5a

1

16 : Photoresist

# FIG.6
## ( a )

16

5a

1

# FIG.6
## ( b )

16

5a

1

$FIG.7$(a)

$FIG.7$(b)

$FIG.8$

$FIG.9$

$FIG.10$

$FIG.11$